# EUROPÄISCHE PATENTSCHRIFT

(11) **EP 2 122 588 B1**
(45) Veröffentlichungstag und Bekanntmachung des Hinweises auf die Patenterteilung: **08.12.2010**
(21) Anmeldenummer: 08709061.9
(22) Anmeldetag: 18.02.2008
(51) Int. Cl.: G07F 7/10

(54) **CHIPKARTE MIT EINER ERSTNUTZERFUNKTION, VERFAHREN ZUR WAHL EINER KENNUNG UND COMPUTERSYSTEM**
CHIP CARD HAVING A FIRST USER FUNCTION, METHOD FOR SELECTING AN IDENTIFIER, AND COMPUTER SYSTEM
CARTE À PUCE AYANT UNE FONCTION DE PREMIER UTILISATEUR, PROCÉDÉ DE SÉLECTION D'UNE IDENTIFICATION ET SYSTÈME INFORMATIQUE

(30) Priorität: 20.02.2007 DE 102007008652
(43) Veröffentlichungstag der Anmeldung: 25.11.2009
(73) Patentinhaber: Bundesdruckerei GmbH, 10958 Berlin (DE)
(72) Erfinder: BYSZIO, Frank, 16348 Wandlitz (DE)
(74) Vertreter: Richardt, Markus Albert
(86) Internationale Anmeldenummer: PCT/EP2008/051919
(87) Internationale Veröffentlichungsnummer: WO 2008/101889

(56) Entgegenhaltungen:
- EP-A- 0 776 141
- EP-A- 0 973 134
- EP-A- 1 215 633
- DE-A1- 19 850 307
- DE-A1-102005 059 066
- FR-A- 2 877 790
- RANKL W ET AL: "Handbuch der Chipkarten, PASSAGE" HANDBUCH DER CHIPKARTEN. AUFBAU - FUNKTIONSWEISE - EINSATZ VON SMART CARDS, MUENCHEN : CARL HANSER VERLAG, DE, 1. Januar 1999 (1999-01-01), Seiten 450-459, XP002268702 ISBN: 978-3-446-21115-5
- RANKL W ET AL: "Handbuch der Chipkarten: 7.5 Identifizierungskommandos; 7.6 Authentifisierungskommandos" HANDBUCH DER CHIPKARTEN: KOMMANDOS VON CHIPKARTEN. CARL HANSER VERLAG, DE, 1. Januar 1999 (1999-01-01), Seiten 412-420, XP002496032 ISBN: 978-3-446-21115-5

## Beschreibung

Die Erfindung betrifft eine Chipkarte mit einer Erstnutzerfunktion, ein Verfahren zur Wahl einer Kennung zum Freischalten einer Chipkarte mit einer Erstnutzerfunktion und ein Computersystem.

Für die Freischaltung einer Chipkarten-Funktion kann eine zuvorige Benutzeridentifizierung gegenüber der Chipkarte erforderlich sein, wie es aus dem Stand der Technik an sich bekannt ist. Die häufigste Benutzeridentifizierung ist die Eingabe einer geheimen Kennung, welche im Allgemeinen als PIN (Personal Identification Number) oder als CHV (Card Holder Verification) bezeichnet wird. Solche Kennungen bestehen im Allgemeinen aus einer numerischen oder alphanumerischen Zeichenkette. Zur Benutzeridentifizierung wird die Kennung von dem Benutzer auf der Tastatur eines Chipkarten-Terminals oder eines Computers, an den ein Chipkarten-Leser angeschlossen ist, eingegeben, und dann zu der Chipkarte gesendet. Diese vergleicht die eingegebene Kennung mit der gespeicherten Kennung und teilt dann das Ergebnis dem Terminal bzw. dem Computer durch Ausgabe eines entsprechenden Signals mit.

Bei den PINs kann zwischen statischen und änderbaren Pins unterschieden werden. Eine statische PIN ist vom Benutzer nicht mehr veränderbar und muss von diesem auswendig gelernt werden. Ist sie bekannt geworden, dann muss der Kartenbenutzer seine Chipkarte zerstören, um Missbrauch durch Unbefugte zu unterbinden, und sich eine neue Chipkarte mit einer anderen statischen PIN besorgen. Ebenso braucht der Benutzer eine neue Chipkarte, wenn er oder sie die statische PIN vergessen hat.

Eine änderbare PIN kann vom Benutzer nach Belieben geändert werden. Zum Ändern der PIN ist es aus Sicherheitsgründen immer notwendig, die aktuell gültige PIN mit zu übergeben, da sonst jede bestehende PIN durch einen Angreifer mit seiner eigenen ersetzt werden könnte.

Anders verhält es sich mit den so genannten Super-PINs oder PUKs (Personal Unlocking Key). Diese haben in der Regel mehr Stellen als die eigentliche PIN, und werden dazu benutzt, einen auf seinem Maximalwert stehenden Fehleingabezähler (wird auch als "Fehlbedienungszähler" bezeichnet) einer PIN wieder zurückzusetzen. Mit der PUK wird auch gleich eine neue PIN an die Chipkarte übergeben, weil ein zurückgesetzter Fehlbedienungszähler wenig nützt, wenn man die PIN vergessen hat. Und dies ist ja meist der Fall, wenn der Fehlbedienungszähler seinen Maximalwert erreicht hat.

Es gibt auch Anwendungen, die Transport-PINs verwenden. Die Chipkarte wird mit einer zufälligen PIN personalisiert, welche der Kartenbenutzer in einem PIN-Brief erhält. Bei der ersten Eingabe wird er aber von der Chipkarte dazu aufgefordert, die personalisierte PIN durch seine eigene zu ersetzen. Bei einem ähnlichen Verfahren, "Null-PIN-Verfahren" genannt, wird die Chipkarte mit einer Trivial-PIN, wie etwa "0000" vorbelegt, und es wird ebenfalls von der Chipkarte bei der ersten Benutzung ein Wechsel erzwungen (vgl. hierzu auch DE 35 23 237 A1, DE 195 07 043 A1, DE 195 07 044 C2, DE 198 50 307 C2, EP 0 730 253 B1).

Aus der DE 198 50 307 C2 ist ein Verfahren zum Schutz vor Missbrauch bei Chipkarten bekannt. Die Chipkarte hat eine Erstnutzerfunktion, die bei der erstmaligen Benutzung der Daten und/oder Funktionen der Chipkarte die Vorgabe einer vom Benutzer beliebig wählbaren, persönlichen Geheimzahl (PIN) fordert, wobei durch die Eingabe der persönlichen Geheimzahl Daten und/oder Funktionen der Chipkarte in einen Benutzt-Status gesetzt werden. Eine spätere Änderung der persönlichen Geheimzahl wird durch einen übergeordneten Entsperrcode ermöglicht.

Chipkarten mit änderbarem PIN haben zwar gegenüber Chipkarten mit einer statischen PIN den Vorteil, dass die Chipkarte unter Umständen nicht durch eine neue ersetzt werden muss, wenn der Benutzer die PIN vergessen hat, beispielsweise in dem mit Hilfe der PUK der Fehlbedienungszähler zurückgesetzt und eine neue PIN eingegeben wird. Allerdings ist eine solche Vorgehensweise für sicherheitskritische Anwendungen, insbesondere für die Vornahme von digitalen Signaturen und im Zahlungsverkehr aufgrund der eingeschränkten Sicherheit gegen Manipulationen nicht akzeptabel. Daher wird bei Anwendungen, die eine sehr hohe Sicherheit erfordern, eine Neueingabe der PIN mittel PUK in der Regel nicht erlaubt. Dies bedeutet, dass lediglich das Rücksetzen des Fehlbedienungszählers mit der PUK erlaubt ist. Der Nachteil ist hier wiederum, dass bei Vergessen der PIN die Chipkarte ersetzt werden muss.

Der Erfindung liegt demgegenüber die Aufgabe zugrunde, eine verbesserte Chipkarte, ein Verfahren zur Wahl einer Kennung zum Freischalten einer Chipkarte und ein Computersystem zu schaffen.

Die der Erfindung zugrunde liegenden Aufgaben werden jeweils mit den Merkmalen der unabhängigen Patentansprüche gelöst. Bevorzugte Ausführungsformen sind in den abhängigen Patentansprüchen angegeben.

Erfindungsgemäß wird eine Chipkarte mit einer Erstnutzerfunktion geschaffen, wobei die Erstnutzerfunktion durch Eingabe eines Codes in einen Erstbenutzungsstatus rücksetzbar ist. Unter "Erstnutzerfunktion" wird hier jede Funktion der Chipkarte verstanden, die sicherstellt, dass die Chipkarte oder eine bestimmte Chipkartenfunktion vor Wahl einer geheimen Kennung, wie zum Beispiel einer PIN, durch den autorisierten Benutzer der Chipkarte zuvor nicht unbefugt benutzt worden ist. Dies schließt an sich aus dem Stand der Technik bekannte Erstnutzerfunktionen ein, insbesondere die aus DE 198 50 307 C2 bekannte Erstnutzerfunktionen.

Erfindungsgemäß wird eine Erstnutzerfunktion der Chipkarte so ausgebildet, dass die Erstnutzerfunktion nach vorheriger Verwendung durch den Benutzer von ihrem Benutzt-Status rücksetzbar ist. Diese Rücksetzung von dem Benutzt-Status in den Erstbenutzungsstatus erfolgt auf eine sichere Art und Weise, nämlich durch Eingabe eines Codes. Die Rücksetzbarkeit der Erstnutzerfunktion in den Erstbenutzungsstatus nach vorheriger Benutzung ermöglicht die erneute Wahl einer Kennung zum Freischalten der Chipkartenfunktion, wenn der Benutzer beispielsweise die zunächst gewählte Kennung vergessen hat.

Die Erfindung ist besonders vorteilhaft, da sie es auch für Chipkartenanwendungen im Hochsicherheitsbereich ermöglicht, dass ein Benutzer eine von ihm vergessene Kennung durch eine neue ersetzt, ohne dass die Chipkarte vernichtet und ausgetauscht werden muss. Aufgrund der sicheren Rücksetzung der Erstnutzerfunktion der Chipkarte aufgrund der Eingabe eines dem Benutzer bekannten Codes kann dies ohne Sicherheitsbeeinträchtigungen erfolgen.

Nach einer Ausführungsform der Erfindung ist die Erstnutzerfunktion der Chipkarte so ausgestaltet, dass sie einen Benutzt-Status und den Erstbenutzungsstatus einnehmen kann. Der Status der Erstnutzerfunktion geht aus dem Erstbenutzungsstatus in den Benutzt-Status über, wenn der Benutzer eine von ihm gewählte geheime Kennung, beispielsweise also eine PIN, in die Chipkarte eingibt, damit sie im Weiteren zum Freischalten einer Chipkartenfunktion verwendet werden kann. Durch Eingabe des Codes kann der Benutzer zu einem späteren Zeitpunkt die Erstnutzerfunktion in den Erstbenutzungsstatus zurücksetzen, um die zuvor gewählte Kennung durch eine andere Kennung zu ersetzen, beispielsweise wenn der Benutzer die zuerst gewählte Kennung vergessen hat.

Nach einer Ausführungsform der Erfindung hat die Chipkarte Mittel zur Sperrung der von dem Benutzer zuvor gewählten Kennung, wenn eine maximale Anzahl von Fehleingaben hinsichtlich dieser Kennung erreicht ist. Die Eingabe des Codes zur Rücksetzung der Erstnutzerfunktion in den Erstbenutzungsstatus ist vorzugsweise erst dann möglich, wenn die zuvor gewählte Kennung gesperrt ist, sodass der Benutzer nachfolgend eine neue Kennung vorgeben kann.

Nach einer Ausführungsform der Erfindung handelt es sich bei dem Code zur Rücksetzung der Erstnutzerfunktion um einen Aktivierungscode für eine Kennung, insbesondere eine PIN, zum Freischalten einer Chipkartenfunktion. Beispielsweise hat die Chipkarte mehrere so genannte PIN-Objekte, wobei jedes PIN-Objekt zur Vorgabe einer PIN zum Freischalten derselben Chipkartenfunktion vorgesehen ist. Bevor der Nutzer eine von ihm gewählte Kennung eingeben kann, muss er zunächst den entsprechenden Aktivierungscode eingeben. Der Aktivierungscode ist nur einmal verwendbar, sodass die Kennung für ein bestimmtes PIN-Objekt nur einmal von dem Benutzer vorgegeben werden kann. Nachfolgend ist eine Änderung einer für ein PIN-Objekt gewählten Kennung nicht mehr möglich. Da aber die Chipkarte mehrere PIN-Objekte hat, kann ein gesperrtes PIN-Objekt, für das eine maximale Anzahl von Fehleingaben erreicht ist, durch ein unbenutztes PIN-Objekt ersetzt werden, hinsichtlich dessen der Benutzer eine neue Kennung vorgeben kann. Zur Vorgabe der neuen Kennung wird die Erstnutzerfunktion bezüglich eines zuvor unbenutzten PIN-Objekts zurückgesetzt, indem der Aktivierungscode für das unbenutztes PIN-Objekt eingegeben wird, wenn das aktuelle PIN-Objekt gesperrt ist.

Nach einer Ausführungsform der Erfindung ist jedem der Aktivierungscodes ein Verwendungszähler zugeordnet. Die Verwendungszähler sind nicht rücksetzbar, sodass sichergestellt ist, dass jeder der Aktivierungscodes nur einmal verwendet werden kann.

Nach einer Ausführungsform der Erfindung hat die Chipkarte einen Fehleingabezähler für jede der Kennungen, wobei die Fehleingabezähler im Lieferzustand der Chipkarte einen ersten initialen Wert von beispielsweise 0 haben. Der initiale Wert signalisiert eine Sperrung der betreffenden Kennungen. Im Lieferzustand sind also zunächst sämtliche PIN-Objekte der Chipkarte gesperrt. Durch Eingabe des Aktivierungscodes des ersten PIN-Objekts der Chipkarte wird der Fehleingabezähler dieses PIN-Objekts auf einen zweiten Wert gesetzt, der einer erlaubten maximalen Anzahl von Fehleingaben entspricht, beispielsweise 3. Der Fehleingabezähler eines PIN-Objekts kann mit Hilfe einer PUK rücksetzbar sein, wobei aber die PIN mit Hilfe der PUK nicht änderbar ist.

Nach einer Ausführungsform der Erfindung hat die Chipkarte Mittel zum Aufbau eines Nachrichtenkanals zu einem Computer, beispielsweise dem Servercomputer eines Trust-Centers, zum Auslesen eines noch nicht verwendeten Aktivierungscodes aus der Chipkarte. Beispielsweise sind die den PIN-Objekten zugeordneten Aktivierungscodes als Teil des Betriebssystems der Chipkarte in der Chipkarte gespeichert. Ein noch nicht verwendeter Aktivierungscode kann von dem Servercomputer über eine gesicherte Nachrichtenverbindung ausgelesen werden, beispielsweise über einen PC des Benutzers mit Ende-zu-Ende-Verschlüsselung des Aktivierungscodes.

Der Aktivierungscode wird dann von dem Servercomputer des Trust-Centers über eine geschützte Verbindung, wie zum Beispiel mittels Secure Messaging oder HTTPS, an den PC des Benutzers übertragen. Der Benutzer kann dann den Aktivierungscode in die Chipkarte eingeben, um die Erstnutzerfunktion zurückzusetzen, sodass die erneute Vorgabe einer Kennung durch den Benutzer möglich ist, ohne dass die Chipkarte ausgetauscht werden muss.

In einem weiteren Aspekt betrifft die Erfindung ein Verfahren zur Wahl einer Kennung zum Freischalten einer Chipkarte mit einer Erstnutzerfunktion, wobei die Erstnutzerfunktion durch Eingabe eines Codes in einen Erstbenutzungsstatus zurückgesetzt wird, um die Eingabe der gewählten Kennung durch einen Benutzer zu ermöglichen.

In einem weiteren Aspekt betrifft die Erfindung ein Computersystem, insbesondere einen Servercomputer eines Trust-Centers, mit Mitteln zum Aufbau eines ersten Nachrichtenkanals zu einer Chipkarte, um einen Aktivierungscode für eine von einem Benutzer wählbaren Kennung aus der Chipkarte auszulesen, und Mitteln zum Aufbau eines zweiten Nachrichtenkanals zu einem Computer eines Benutzers der Chipkarte, um den Aktivierungscode an den Computer zu übertragen.

Das Computersystem kann aber auch so ausgebildet sein, dass die Aktivierungscodes der an die Benutzer ausgegebenen Chipkarten in einer Datenbank gespeichert oder bei Bedarf generierbar sind. Aufgrund einer entsprechenden Anfrage eines Benutzers wird dann ein zuvor noch nicht verwendeter Aktivierungscode aus der Datenbank ausgelesen oder generiert, um den neuen Aktivierungscode dem Benutzer mitzuteilen, sodass dieser eine neue Kennung vorgeben kann.

Im Weiteren werden Ausführungsformen der Erfindung mit Bezugnahme auf die Zeichnungen näher erläutert. Es zeigen:
- Figur 1: ein Blockdiagramm einer ersten Ausführungsform einer erfindungsge- mäßen Chipkarte,
- Figur 2: ein Flussdiagramm einer Ausführungsform eines erfindungsgemäßen Verfahrens,
- Figur 3: ein Blockdiagramm einer zweiten Ausführungsform einer erfindungsge- mäßen Chipkarte mit mehreren Aktivierungscodes,
- Figur 4: ein Flussdiagramm einer weiteren Ausführungsform eines erfindungs- gemäßen Verfahrens,
- Figur 5: ein Blockdiagramm eines erfindungsgemäßen Computersystems,
- Figur 6: ein Flussdiagramm einer dritten Ausführungsform eines erfindungsge- mäßen Verfahrens.

Elemente der nachfolgenden Figuren, die einander entsprechen, sind jeweils mit denselben Bezugszeichen gekennzeichnet.

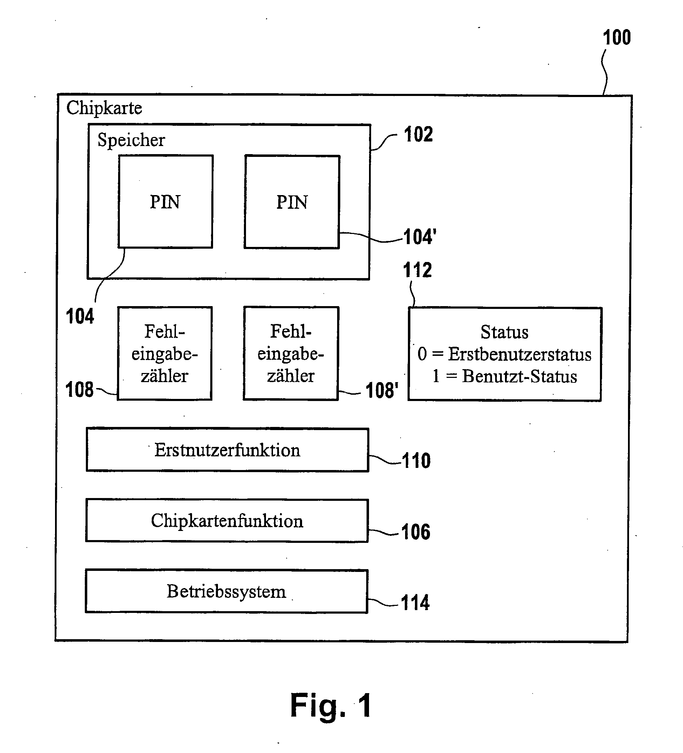

Die Figur 1 zeigt eine Chipkarte 100 mit einem elektronischen Speicher 102 zur Speicherung einer geheimen Kennung 104, wie zum Beispiel einer so genannten PIN. Die geheime Kennung 104 dient zum Freischalten einer Chipkartenfunktion 106 der Chipkarte 100.

Die Chipkarte 100 hat einen Fehleingabezähler 108 für die geheime Kennung 104. Nach jedem ungültigen Eingabeversuch der Kennung 104 wird der Fehleingabezähler 108 inkrementiert oder dekrementiert bis eine maximale Anzahl von Fehleingaben erreicht ist. Gegebenenfalls kann hier auch mittels einer PUK die Anzahl der Fehleingaben erhöht werden, indem mittels der PUK der Fehlbedienungszähler mehrere Male zurückgesetzt wird. Eine Änderung der PIN, d.h. der Kennung 104, ist aber mit der PUK nicht möglich. Sobald diese maximale Anzahl von Fehleingaben erreicht worden ist, wird die Kennung 104 gesperrt. Wenn die Kennung 104 gesperrt ist, kann auch durch Eingabe einer zutreffenden Kennung die Chipkartenfunktion 108 nicht mehr freigeschaltet werden.

Die Chipkarte 100 hat eine Erstnutzerfunktion 110. Zu der Erstnutzerfunktion 110 gehört ein Status-Register 112, welches den aktuellen Status der Erstnutzerfunktion angibt. Die Erstnutzerfunktion 110 kann in der hier betrachteten Ausführungsform zwei Stati aufweisen: den Erstbenutzungsstatus, d.h. Status = 0, der angibt, dass eine Kennung 104 noch nicht von dem autorisierten Benutzer vorgegeben worden ist, oder einen Benutzt-Status, d.h. Status = 1, der angibt, dass eine gültige Kennung 104 von dem autorisierten Benutzer vorgegeben und in dem Speicher 102 gespeichert worden ist. Aufgrund des in dem Status-Register 112 gespeicherten Status der Erstnutzerfunktion 110 kann sich ein autorisierter Benutzer also dahingehend versichern, dass nicht bereits zuvor von einem dritten, nicht autorisierten Benutzer eine Kennung vorgegeben worden ist.

Anstelle des Status-Registers 112 kann auch ein Verwendungszähler für eine Transport-PIN dazu dienen, den aktuellen Status festzulegen. Wenn der Zählerstand der Transport-PIN beispielsweise angibt, dass diese noch nicht verwendet worden ist, so zeigt dies den "Erstbenutzerstatus" an, wohingegen ein Zählerstand, der angibt, dass die Transport-PIN benutzt worden ist, den "Benutzt-Status" bedeutet.

Die Chipkarte 100 hat ferner ein Chipkarten-Betriebssystem 114. Das Chipkarten-Betriebssystem 114 kann den Fehleingabezähler 108 und/oder das Status-Register 112 und/oder die Erstnutzerfunktion 110 oder Teile hiervon implementieren.

Nach einer Ausführungsform wird dem autorisierten Benutzer nach Aushändigung der Chipkarte 100 gesondert die geheime Kennung 104 mitgeteilt, beispielsweise in Form eines PIN-Briefes oder auf elektronischen Wege. Bei erstmaliger Verwendung der Chipkarte 100 kann der Benutzer den Status der Erstnutzerfunktion 110, beispielsweise über ein Chipkartenterminal, abfragen, um sich dahingehend zu versichern, dass die Chipkarte 100 noch unbenutzt ist. Bei erstmaliger Eingabe der ihm mitgeteilten Kennung 104 wird der Status der Erstnutzerfunktion 110 dann auf 1 gesetzt.

Wenn der Benutzer im Weiteren mehrfach eine nicht zutreffende Kennung eingibt, um die Chipkartenfunktion 106 freizuschalten, erreicht der Fehleingabezähler 108 einen Zählerstand, der der maximal zulässigen Anzahl von Fehleingaben entspricht. Mit Erreichung dieses Zählerstandes des Fehleingabezählers 108 wird die Kennung 104 gesperrt.

Durch Eingabe eines Codes kann der Benutzer dann die Erstnutzerfunktion 110 in den Erstbenutzungsstatus, d.h. Status = 0, zurücksetzen. Hierdurch wird durch das Chipkarten-Betriebssystem 114 auf eine in dem Speicher 102 gespeicherte Ersatzkennung 104' umgeschaltet, der ein Ersatz-Fehleingabezähler 108' zugeordnet ist. Der Ersatz-Fehleingabezähler 108 hat dabei noch seinen initialen Wert des Lieferzustandes. Der autorisierte Benutzer der Chipkarte 100 erhält die Ersatzkennung 104' auf Anfrage bei dem Herausgeber der Chipkarte 100 wiederum beispielsweise mittels eines so genannten PIN-Briefes oder auf elektronischem Wege. Falls mehrere geheime Kennungen in dem Speicher 102 gespeichert sind, kann dieser Vorgang auch mehrfach wiederholt werden.

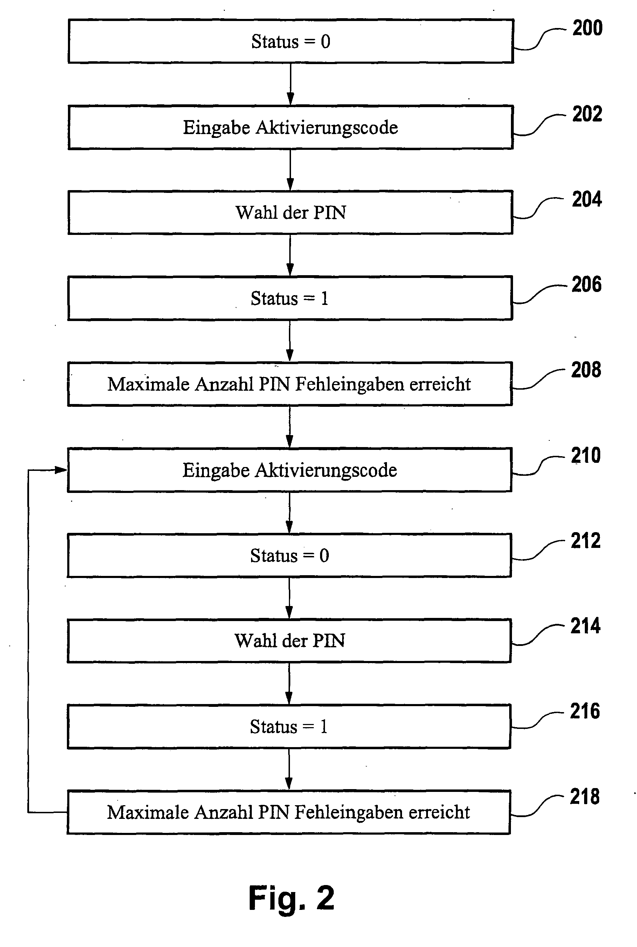

Der Code für die Rücksetzung der Erstnutzerfunktion 110 kann dem Benutzer auf einem sicheren Wege von dem Herausgeber der Chipkarte mitgeteilt werden, wie zum Beispiel per Post oder auf elektronischen Wege. Bei dem Code kann es sich auch beispielsweise um eine so genannte 0-PIN oder einen Aktivierungscode handeln. Ein entsprechendes Flussdiagramm zeigt die Figur 2.

In dem Schritt 200 befindet sich die Chipkarte 100 in ihrem Lieferzustand, d.h. der Status der Erstnutzerfunktion 110 ist 0. In dem Schritt 202 gibt der Benutzer einen Aktivierungscode ein, den er zum Beispiel per PIN-Brief von dem Herausgeber der Chipkarte erhalten hat. Der Benutzer wählt eine PIN aus und gibt diese in dem Schritt 204 in die Chipkarte ein. Mit Hilfe der so von dem Benutzer vorgegebenen PIN soll im Weiteren die Chipkartenfunktion 106 der Chipkarte 100 freischaltbar sein. Dementsprechend wird in dem Schritt 206 der Status der Erstnutzerfunktion 110 auf 1 gesetzt.

Im Weiteren kann es zu Fehleingaben der von dem Benutzer gewählten PIN kommen, beispielsweise wenn der Benutzer seine PIN vergessen hat. Wenn in dem Schritt 208 die maximale Anzahl von Fehleingaben der PIN erreicht wird, so wird die PIN gesperrt.

In dem Schritt 210 kann der Benutzer einen weiteren Aktivierungscode eingeben. Hierbei kann es sich um denselben Aktivierungscode, wie den zuvor in dem Schritt 202 eingegebenen Code handeln, oder um einen neuen Aktivierungscode, den der Benutzer auf Anforderung von dem Herausgeber der Chipkarte 100 erhalten hat. Aufgrund der Eingabe des Aktivierungscodes in dem Schritt 210 wird der Status der Erstnutzerfunktion 110 auf 0 zurückgesetzt (Schritt 212). Aufgrund dessen wird in dem Schritt 214 die Vorgabe einer neuen PIN durch den Benutzer ermöglicht. Aufgrund der von dem Benutzer neu vergebenen PIN wird der Status der Erstnutzerfunktion 110 in dem Schritt 216 wieder auf 1 gesetzt. Wird im Weiteren in dem Schritt 218 wiederum die maximale Anzahl von Fehleingaben erreicht, so kann - je nach Ausführungsform - die Abfolge der Schritte 210 bis 218 noch ein- oder mehrfach wiederholt werden.

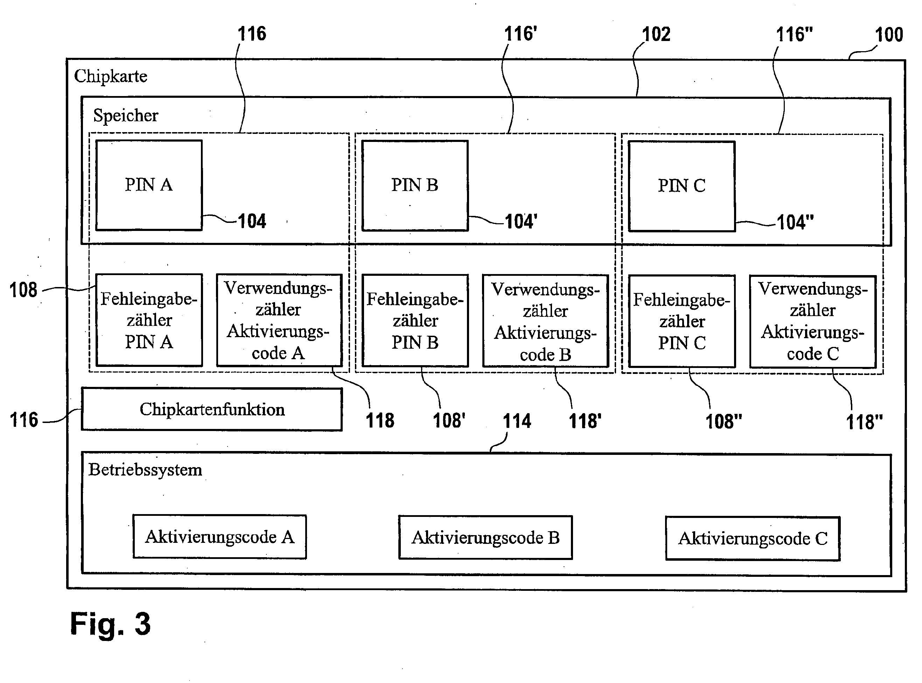

Die Figur 3 zeigt eine weitere Ausführungsform der Chipkarte 100. Bei dieser Ausführungsform beinhaltet die Chipkarte 100 mehrere PIN-Objekte, in dem betrachteten Beispiel die PIN-Objekte 116, 116' und 116". Zu dem PIN-Objekt 116 gehört die Kennung 104, d.h. die PIN A, der der Fehleingabezähler 108 zugeordnet ist sowie ein Verwendungszähler 118 für den Aktivierungscode A, der der PIN A zugeordnet ist. Entsprechend verhält es sich für die PINs B und C der PIN-Objekte 116' und 116", denen entsprechende Fehleingabezähler oder Verwendungszähler zugeordnet sind.

Die Aktivierungscodes A, B, C für die PIN-Objekte 116, 116' bzw. 116" sind als Teil des Betriebssystems 114 in der Chipkarte 100 gespeichert. Die Aktivierungscodes A, B, C sind im Lieferzustand der Chipkarte 100 fest vorgegeben, wohingegen die PINs A, B, C von dem Benutzer gewählt werden können. Durch die Verwendungszähler wird sichergestellt, dass jeder der Aktivierungscodes nur einmal verwendet werden kann, sodass der Benutzer für jedes der PIN-Objekte die betreffende PIN nur einmal vorgeben kann. Nach Sperrung der betreffenden PIN aufgrund einer maximalen Anzahl von Fehleingaben geht das Betriebssystem 114 zum nächsten noch nicht verwendeten PIN-Objekt über, für das der Benutzer dann eine Ersatz-PIN wählen kann.

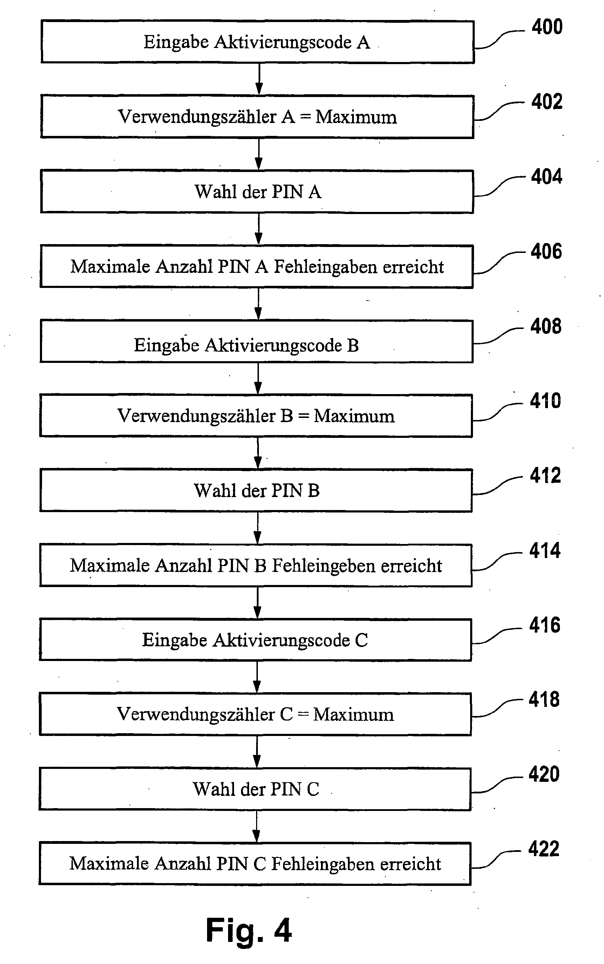

Die Figur 4 zeigt die Arbeitsweise der Chipkarte 100 in der Ausführungsform der Figur 3.

Im Lieferzustand der Chipkarte 100 stehen sämtliche Fehleingabezähler und Verwendungszähler auf ihren initialen Werten, wie zum Beispiel auf 0. Für einen Fehleingabezähler bedeutet in diesem Beispiel der Zählerstand 0, dass das betreffende PIN-Objekt gesperrt ist. Für einen Verwendungszähler bedeutet in diesem Beispiel ein Zählerstand von 0, dass das betreffende PIN-Objekt noch nicht von dem Benutzer durch Eingabe des entsprechenden Aktivierungscodes initialisiert worden ist. Ein Zählerstand von 1 eines Verwendungszählers bedeutet dagegen, dass die PIN des entsprechenden PIN-Objekts von dem Benutzer nach Eingabe des entsprechenden Aktivierungscodes bereits vorgegeben worden ist.

In der betrachteten Ausführungsform sind die Verwendungszähler nicht rücksetzbar, um sicherzustellen, dass jeder Aktivierungscode nur einmal verwendet werden kann. Auch die Fehleingabezähler können so ausgebildet sein, dass sie nicht zurückgesetzt werden können. Die Chipkarte 100 kann aber auch so ausgebildet sein, dass die Rücksetzung eines Fehleingabezählers mit Hilfe einer so genanten PUK möglich ist, wobei aber keine Änderung der betreffenden PIN ermöglicht wird.

In der hier betrachteten Ausführungsform bilden die Verwendungszähler zusammen mit den Fehleingabezählern die Erstnutzerfunktion (vgl. die Erstnutzerfunktion 110 in der Ausführungsform der Figur 1). Durch Eingabe eines Aktivierungscode wird nämlich der Status der Erstnutzerfunktion bezüglich des betreffenden PIN-Objekts in den Benutzt-Status überführt, was durch den Zählerstand des betreffenden Verwendungszählers angezeigt wird. Wird dieses PIN-Objekt im Weiteren aufgrund einer maximalen Anzahl von Fehleingaben gesperrt, was durch einen entsprechenden Zählerstand des Fehleingabezählers angezeigt wird, so kann die Erstnutzerfunktion durch Eingabe eines weiteren Aktivierungscodes eines der Ersatz-PIN-Objekte zurückgesetzt werden. Diese Rücksetzung erfolgt so, dass das gesperrte PIN-Objekt durch eines der Ersatz-PIN-Objekte von dem Betriebssystem 114 ersetzt wird, dessen Verwendungszähler ja zunächst auf 0 steht, was den Erstbenutzungsstatus ausweist.

Die Figur 4 zeigt ein entsprechendes Flussdiagramm: In dem Schritt 400 befindet sich die Chipkarte 100 in ihrem Lieferzustand. Der Benutzer der Chipkarte 100 gibt den Aktivierungscode A ein (Schritt 400), der ihm beispielsweise auf elektronischen Wege oder per Post mitgeteilt worden ist. Die weiteren Aktivierungscodes B und C sind dem Benutzer zunächst nicht bekannt und nicht ohne weiteres aus dem Betriebssystem 114 auslesbar. Aufgrund der Eingabe des Aktivierungscodes A wird der Fehleingabezähler 108 des ersten PIN-Objekts 116 auf seinen Maximalwert von zum Beispiel 3 gesetzt (Schritt 402). Der Verwendungszähler 118 wird von 0 auf 1 inkrementiert. Bei korrekter Eingabe des Aktivierungscodes A kann der Benutzer nachfolgend die von ihm gewählte PIN A eingeben, sodass sie als Kennung 104 in dem Speicher 102 als Teil des PIN-Objekts 116 gespeichert wird (Schritt 404). Nachfolgend kann der Benutzer die Chipkartenfunktion 116 nach Bedarf durch Eingabe der zutreffenden PIN A freischalten.

Mit jeder Fehleingabe der PIN A wird der Fehleingabezähler 108 dekrementiert, bis er seinen initialen Wert von 0 erreicht hat (Schritt 406). Das PIN-Objekt 116 ist dann gesperrt. Eine erneute Eingabe des Aktivierungscodes A zur Änderung der PIN ist nicht möglich, da der Verwendungszähler nicht rücksetzbar ist. In einer Ausführungsform der Chipkarte 100 kann der Fehleingabezähler 108 zurückgesetzt, d.h. auf seinen Maximalwert von 3 gesetzt werden. Wenn der Benutzer aber die von ihm gewählte PIN A vergessen hat, so nutzt auch dieses nichts, da die PIN A ja nicht mehr verändert werden kann. In dieser Situation kann der Benutzer die Erstnutzerfunktion von dem Benutzt-Status 1, den der Verwendungszähler 118 angibt, durch Eingabe des Aktivierungscodes B des ersten Ersatz-PIN-Objekts 116' zurücksetzen (Schritt 408). Hierdurch wird der Verwendungszähler der PIN B auf seinen Maximalwert gesetzt (Schritt 410)

Aufgrund der Eingabe des Aktivierungscodes B ersetzt nämlich das Betriebssystem 114 das bisher aktuelle PIN-Objekt 116 durch das erste Ersatz-PIN-Objekt 116', dessen Verwendungszähler 118' zunächst auf 0 steht, was den Erstbenutzungsstatus anzeigt. Aufgrund der Eingabe des Aktivierungscodes B wird der Verwendungszähler dann aber unmittelbar nachfolgend auf 1 inkrementiert und der Benutzer kann die Ersatz-PIN B vorgeben (Schritt 412), sodass diese als Kennung 104' in den Speicher 102 als Teil des Ersatz-PIN-Objekts 116' gespeichert wird. Im Weiteren kann der Benutzer dann die PIN B für die Freischaltung der Chipkartenfunktion 116 verwenden. Vergisst der Benutzer auch die PIN B, so dass der Fehlbedienungszähler durch Fehleingaben seinen Maximalwert erreicht (Schritt 414), so kann die Erstnutzerfunktion durch Eingabe des Aktivierungscodes C nochmals zurückgesetzt werden, um die PIN C des Ersatz-PIN-Objekts 116" zu wählen (Schritte 416 bis 422 analog zu den Schritten 408 bis 414).

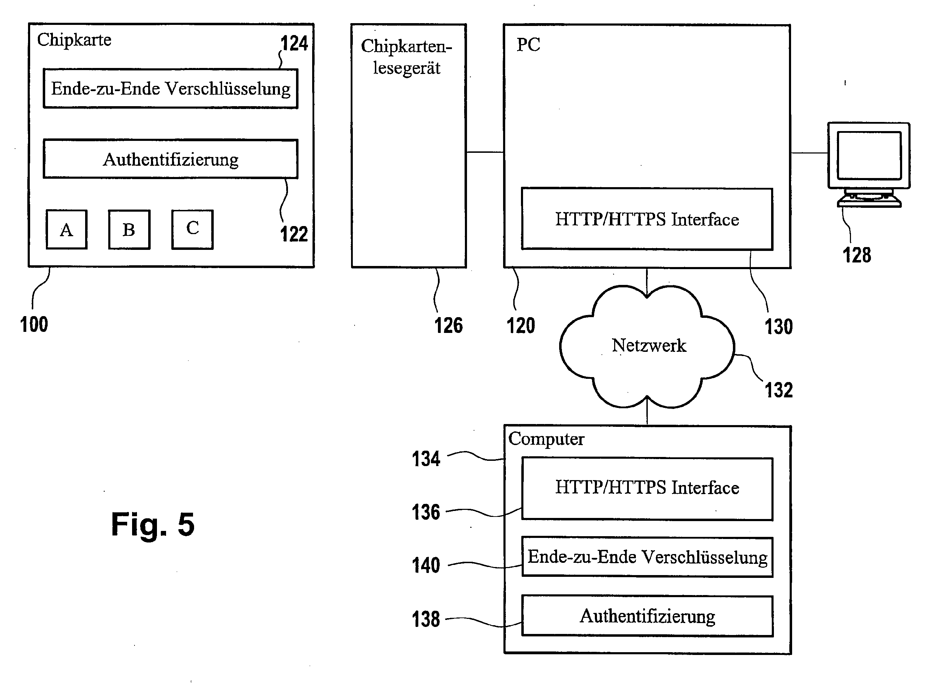

Die Figur 5 zeigt einen Computer 120, wie zum Beispiel einen PC eines Benutzers der Chipkarte 100. Die Chipkarte 100 kann prinzipiell gleich aufgebaut sein wie die Chipkarten gemäß den oben beschriebenen Ausführungsformen. Beispielsweise sind also als Teil des Betriebssystems der Chipkarte 100 die Aktivierungscodes A, B und C in der Chipkarte 100 gespeichert. Zusätzlich zu den oben betrachteten Ausführungsformen hat die Chipkarte 100 ein Authentifizierungsmodul 122 und ein Verschlüsselungsmodul 124 für eine Ende-zu-Ende-Verschlüsselung.

An den Computer 120 ist ein Chipkarten-Lesegerät 126 angeschlossen sowie ein Monitor 128. Der Computer 120 hat eine Schnittstelle 130, zum Beispiel zu einem Netzwerk 132. Bei dem Netzwerk 132 kann es sich um das Internet handeln, wobei die Schnittstelle 130 als http- und/oder https-fähiges Interface ausgebildet sein kann.

Ein weiterer Computer 134 ist ebenfalls an das Netzwerk 132 angeschlossen. Hierbei kann es sich um den Servercomputer eines Trust-Centers handeln. Der Computer 134 hat eine Schnittstelle 136 für das Netzwerk 132, die ebenfalls http- und/oder https-fähig sein kann. Ferner hat der Computer 134 ein Authentifizierungsmodul 138, das dem Authentifizierungsmodul 122 und ein Verschlüsselungsmodul 140, das dem Verschlüsselungsmodul 124 der Chipkarte entspricht.

Wenn der Benutzer der Chipkarte 100 seine zuerst gewählte PIN A vergessen hat, so kann er den Aktivierungscode B zur Rücksetzung der Erstnutzerfunktion und zur Wahl einer neuen PIN B wie folgt erhalten:
Der Benutzer führt die Chipkarte 100 in das Chipkarten-Lesegerät 126 ein. Über den PC 120, dessen Schnittstelle 130 und das Netzwerk 132 wird dann eine Verbindung zwischen der Chipkarte 100 und dem Computer 134 aufgebaut. Zwischen der Chipkarte 100 und dem Computer 134 findet eine gegenseitige Authentifizierung durch die Authentifizierungsmodule 122 und 140 über diese Verbindung statt. Die Chipkarte 100 liest den nächsten noch nicht verwendeten Aktivierungscode aus dem Betriebssystem 114 aus, d.h. hier den Aktivierungscode B, verschlüsselt diesen mit Hilfe des Verschlüsselungsmoduls 124, und versendet den verschlüsselten Aktivierungscode B über den PC 120 an den Computer 134, wo der Aktivierungscode B durch das Verschlüsselungsmodul 140 entschlüsselt wird.

Zwischen dem Computer 134 und dem PC 120 wird nachfolgend eine weitere Verbindung aufgebaut, wie zum Beispiel eine Secure Messaging-Verbindung, insbesondere unter Verwendung von https. Der Aktivierungscode B wird über diese geschützte Verbindung von dem Computer 134 an den Computer 120 übertragen und zum Beispiel über den Monitor 128 ausgegeben. Auf diese Art und Weise erhält der Benutzer den Aktivierungscode B. Der Benutzer kann den Aktivierungscode B manuell in die Chipkarte 100 eingeben. Dies kann auch automatisch durch den PC 120 erfolgen. Im letzteren Fall ist eine Anzeige des Aktivierungscodes B auf dem Monitor 128 nicht erforderlich.

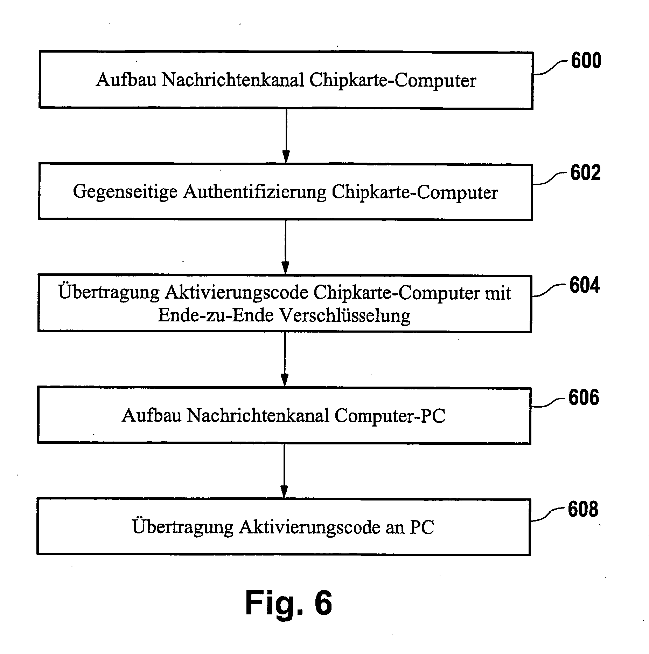

Die Figur 6 zeigt ein entsprechendes Flussdiagramm.

In dem Schritt 600 wird ein Nachrichtenkanal zwischen der Chipkarte 100 und dem Computer 134 aufgebaut. Nach gegenseitiger Authentifizierung in dem Schritt 602 wird ein zuvor noch nicht verwendeter Aktivierungscode der Chipkarte 100 von der Chipkarte 100 an den Computer 134 mit Hilfe von Ende-zu-Ende-Verschlüsselung übertragen (Schritt 604). In dem Schritt 606 wird ein Nachrichtenkanal zwischen dem Computer 134 und dem Computer 120 des Benutzers aufgebaut. Über diesen Nachrichtenkanal wird der zuvor aus der Chipkarte 100 ausgelesene Aktivierungscode übertragen, sodass der Benutzer diesen Aktivierungscode erhält, um eine neue Kennung des entsprechenden Ersatz-PIN-Objekts zu wählen.

### Bezugszeichenliste

- 100: Chipkarte
- 102: Speicher
- 104: Kennung
- 104': Ersatzkennung
- 104": Ersatzkennung
- 106: Chipkartenfunktion
- 108: Fehleingabezähler
- 108': Ersatz-Fehleingabezähler
- 108": Ersatz-Fehleingabezähler
- 110: Erstnutzerfunktion
- 112: Status-Register
- 114: Chipkarten-Betriebssystem
- 116: PIN-Objekt
- 116': PIN-Objekt
- 116": PIN-Objekt
- 118: Verwendungszähler
- 118': Ersatz-Verwendungszähler
- 118": Ersatz-Verwendungszähler
- 102: Computer
- 122: Authentifizierungsmodul
- 124: Verschlüsselungsmodul
- 126: Chipkarten-Lesegerät
- 128: Monitor
- 130: Schnittstelle
- 132: Netzwerk
- 134: Computer
- 136: Schnittstelle
- 138: Authentifizierungsmodul
- 140: Verschlüsselungsmodul

## Patentansprüche

1. Chipkarte mit mehreren PIN-Objekten (116, 116', 116"), wobei jedes der PIN-Objekte durch eine von einem Benutzer wählbare Kennung (104, 104', 104") zum Freischalten einer bestimmten Chipkartenfunktion (106), einen der Kennung zugeordneten Fehleingabezähler (108, 108', 108") und einen Verwendungszähler (118, 118', 118") für einen der Kennung zugeordneten Aktivierungscode gebildet wird, wobei die Aktivierungscodes als Teil eines Betriebssystems (114) der Chipkarte gespeichert sind, und mit einer Erstnutzerfunktion (110), wobei die Erstnutzerfunktion durch Eingabe eines der Aktivierungscodes (B, C) in einen Erstbenutzungsstatus rücksetzbar ist, wobei es sich bei der Erstnutzerfunktion um eine Funktion der Chipkarte handelt, die sicherstellt, dass die Chipkarte oder die bestimmte Chipkartenfunktion (106) der Chipkarte vor Wahl der Kennung durch den autorisierten Benutzer der Chipkarte zuvor nicht unbefugt benutzt worden ist, wobei durch die Verwendungszähler und die Fehlereingabezähler die Erstnutzerfunktion gebildet wird, indem durch Eingabe eines der Aktivierungskodes der Status der Erstnutzerfunktion bezüglich des betreffenden PIN-Objekts in den Benutzt-Status überführt wird, was durch den Zählerstand des betreffenden Verwendungszählers angezeigt wird, wobei die Erstbenutzungsfunktion rücksetzbar ist, wenn dieses PIN-Objekt gesperrt ist, indem ein weiterer der Aktivierungkodes eingegeben wird, so dass das gesperrte PIN-Objekt durch ein anderes der PIN-Objekte ersetzt wird, welches einen Erstbenutzungszustand aufweist, wobei jeder Aktivierungscode nur einmal zur Rücksetzung der Erstnutzerfunktion verwendbar ist, und wobei die Verwendungszähler (118, 118', 118") nicht rücksetzbar sind.

2. Chipkarte nach Anspruch 1, wobei die Erstnutzerfunktion einen Benutzt-Status und den Erstbenutzungsstatus einnehmen kann, und wobei die Erstnutzungsfunktion so ausgebildet ist, dass der Status der Erstnutzungsfunktion aus dem Erstbenutzungsstatus in den Benutzt-Status übergeht, wenn eine Kennung (104, 104', 104") von einem Benutzer zum Freischalten der Chipkartenfunktion (106) gewählt wird.

3. Chipkarte nach Anspruch 2, mit Mitteln (108, 108', 108") zur Sperrung der Kennung, wenn eine maximale Anzahl von Fehleingaben erreicht ist, wobei nach der Sperrung der Kennung der Aktivierungscode zur Rücksetzung der Erstnutzerfunktion eingebbar ist, um eine erneute Wahl der Kennung zu ermöglichen.

4. Chipkarte nach Anspruch 1, 2 oder 3, wobei die Fehleingabezähler einen ersten initialen Wert haben, der eine Sperrung der betreffenden Kennungen signalisiert, und wobei die Fehleingabezähler durch Eingabe des entsprechenden Aktivierungscodes auf einen zweiten Wert setzbar sind, der entsprechend der maximal erlaubten Anzahl von Fehleingaben von dem ersten Wert beabstandet ist.

5. Chipkarte nach einem der vorhergehenden Ansprüche, mit Mitteln (124) zum Aufbau eines Nachrichtenkanals zu einem Computer (134) zum Auslesen einer der Aktivierungscodes aus der Chipkarte und zur Übertragung des Aktivierungscodes an den Computer.

6. Chipkarte nach Anspruch 5, mit Mitteln zur Ende-zu-Ende-Verschlüsselung (124) zur geschützten Übertragung des Aktivierungscodes an den Computer.

7. Chipkarte nach Anspruch 5 oder 6, mit Mitteln (124) zur gegenseitigen Authentisierung der Chipkarte und des Computers.

8. Verfahren zur Wahl einer Kennung (104) zum Freischalten einer Chipkarte (100) mit einer Erstnutzerfunktion (110), wobei es sich bei der Erstnutzerfunktion um eine Funktion der Chipkarte handelt, die sicherstellt, dass die Chipkarte oder eine bestimmte Chipkartenfunktion der Chipkarte vor Wahl der Kennung (104) durch den autorisierten Benutzer der Chipkarte zuvor nicht unbefugt benutzt worden ist, wobei die Erstnutzerfunktion der Chipkarte in Lieferzustand durch Eingabe (202) eines ersten Aktivierungscodes (A) und nach Eingabe (204) einer ersten Kennung (104) durch einen Benutzer zum Freischalten der Chipkartenfunktion in einem Benutzt-Status, übergeht (206) und wobei die Erstnutzerfunktion durch Eingabe eines zweiten Aktivierungscodes (B, C) in einen Erstbenutzungsstatus zurückgesetzt wird, um die Eingabe der gewählten Kennung durch einen Benutzer zu ermöglichen,
mit folgenden weiteren Schritten:
- Sperrung (208) der ersten Kennung aufgrund einer maximalen Anzahl von Fehleingaben der ersten Kennung,
- Eingabe (210) des zweiten Äktivierungscodes (B, C),
- Zurücksetzung (212) der Erstnutzerfunktion in der Erstbenutzungsstatus,
- Eingabe (214) einer zweiten Kennung (104') zum Freischalten der Chipkartenfunktion,
- erneute Setzung (216) der Erstnutzerfunktion in den Benutztstatus,
wobei jeder der Kennungen (104, 104') ein Aktivierungscode (A, B, C) zugeordnet ist, der vor Eingabe der Kennung eingegeben wird, um die Eingabe der gewählten Kennung durch den Benutzer zu ermöglichen, und
wobei jeder Aktivierungscode jeder der Kennungen nur einmal verwendbar ist.

9. Verfahren nach Anspruch 8, mit folgenden weiteren Schritten:
- Aufbau eines ersten Nachrichtenkanals zwischen der Chipkarte und einem ersten Computer (134) zur Übertragung eines Aktivierungscodes von der Chipkarte zu dem ersten Computer,
- Aufbau eines zweiten Nachrichtenkanals zwischen dem ersten Computer und einem zweiten Computer (120) zur Übertragung des Aktivierungscodes von dem ersten Computer an den zweiten Computer.

10. Verfahren nach Anspruch 9, wobei die Übertragung des Aktivierungscodes über den ersten Nachrichtenkanal mittels Ende-zu-Ende-Verschlüsselung über den zweiten Computer erfolgt.

11. Computersystem mit
- Mitteln (136, 140) zum Aufbau eines ersten Nachrichtenkanals zu einer Chipkarte (100) nach einem der Ansprüche 1 bis 7, um einen Aktivierungscode für eine von einem Benutzer wählbaren Kennung aus der Chipkarte auszulesen,
- Mitteln (136) zum Aufbau eines zweiten Nachrichtenkanals zu einem Computer (120) eines Benutzers der Chipkarte, um den Aktivierungscode an den Computer zu übertragen.

12. Computersystem nach Anspruch 11, mit Mitteln (140) zur Ende-zu-Ende-Verschlüsselung für die Übertragung des Aktivierungscodes über den ersten Nachrichtenkanal und mit Mitteln (136) zum Secure Messaging zur geschützten Übertragung des Aktivierungscodes über den zweiten Nachrichtenkanal.

## Claims

1. Chip card having a plurality of PIN objects (116, 116', 116"), wherein each of the PIN objects is formed by a user-selectable identifier (104, 104', 104") for enabling a particular chip card function (106), an incorrect input counter (108, 108', 108") associated with the identifier, and a use counter (118, 188', 118") for an activation code associated with the identifier, wherein the activation codes are stored as part of an operating system (114) for the chip card, and having a first-user function (110), wherein the first-user function can be reset to a first-use status by inputting one of the activation codes (B, C), wherein the first-user function is a function of the chip card which ensures that the chip card or the particular chip card function (106) of the chip card has not previously been used without authorization prior to selection of the identifier by the authorized user of the chip card, wherein the use counters and the incorrect input counters form the first-user function by virtue of the input of one of the activation codes transferring the status of the first-user function for the relevant PIN object to the used status, which is indicated by the counter reading on the relevant use counter, wherein the first-user function can be reset when this PIN object is blocked by virtue of a further one of the activation codes being input, so that the blocked PIN object is replaced by another of the PIN objects which has a first-use state, wherein each activation code can be used only once to reset the first-user function, and wherein the use counters (118, 118', 118") cannot be reset.

2. Chip card according to Claim 1, wherein the first-user function can adopt a used status and the first-use status, and wherein the first-use function is designed such that the status of the first-use function changes from the first-use status to the used status when an identifier (104, 104', 104") is selected by a user in order to enable the chip card function (106).

3. Chip card according to Claim 2, having means (108, 108', 108") for blocking the identifier when a maximum number of incorrect inputs has been reached, wherein when the identifier has been blocked it is possible to input the activation code for resetting the first-user function in order to allow a fresh selection of the identifier.

4. Chip card according to Claim 1, 2 or 3, wherein the incorrect input counters have a first initial value which signals that the relevant identifiers are blocked, and wherein the incorrect input counters can be set, by inputting the relevant activation code, to a second value which is at a distance from the first value in accordance with the maximum permitted number of incorrect inputs.

5. Chip card according to one of the preceding claims, having means (124) for setting up a communication channel to a computer (134) for the purpose of reading one of the activation codes from the chip card and for the purpose of transmitting the activation code to the computer.

6. Chip card according to Claim 5, having means for end-to-end encryption (124) for the purpose of protected transmission of the activation code to the computer.

7. Chip card according to Claim 5 or 6, having means (124) for the reciprocal authentication of the chip card and of the computer.

8. Method for selecting an identifier (104) for enabling a chip card (100) having a first-user function (110), wherein the first-user function is a function of the chip card which ensures that the chip card or a particular chip card function of the chip card has not previously been used without authorization prior to selection of the identifier (104) by the authorized user of the chip card, wherein the first-user function of the chip card in the as-delivered state changes (206) to a used status as a result of input (202) of a first activation code (A) and following input (204) of a first identifier (104) by a user for the purpose of enabling the chip card function and wherein the first-user function is reset to a first-use status by virtue of input of a second activation code (B, C) in order to allow the input of the selected identifier by a user, having the following further steps:
- the first identifier is blocked (208) on the basis of a maximum number of incorrect inputs for the first identifier,
- the second activation code (B, C) is input (210),
- the first-user function is reset (212) to the first-use status,
- a second identifier (104') is input (214) in order to enable the chip card function,
- the first-user function is set (216) to the used status again,
wherein each of the identifiers (104, 104') has an associated activation code (A, B, C) which is input prior to input of the identifier in order to allow the input of the selected identifier by the user, and wherein each activation code for each of the identifiers can be used only once.

9. Method according to Claim 8, having the following further steps:
- a first communication channel is set up between the chip card and a first computer (134) for the purpose of transmitting an activation code from the chip card to the first computer,
- a second communication channel is set up between the first computer and a second computer (120) for the purpose of transmitting the activation code from the first computer to the second computer.

10. Method according to Claim 9, wherein the activation code is transmitted via the first communication channel by means of end-to-end encryption via the second computer.

11. Computer system having
- means (136, 140) for setting up a first communication channel to a chip card (100) according to one of Claims 1 to 7 in order to read an activation code for an identifier which can be selected by a user from the chip card,
- means (136) for setting up a second communication channel to a computer (120) of a user of the chip card in order to transmit the activation code to the computer.

12. Computer system according to Claim 11, having means (140) for end-to-end encryption for the transmission of the activation code via the first communication channel and having means (136) for secure massaging for the purpose of protected transmission of the activation code via the second communication channel.

## Revendications

1. Carte à puce présentant plusieurs objets PIN (116, 116', 116"), chacun des objets PIN étant formé par une caractéristique (104, 104', 104"), sélectionnée par l'utilisateur, qui libère une fonction définie (106) de la carte à puce, par un compteur (108, 108', 108") d'erreurs d'introduction associé à la caractéristique et par un compteur (118, 118', 118") d'utilisations d'un code d'activation associé à la caractéristique, les codes d'activation étant conservés en mémoire comme parties du système d'exploitation (114) de la carte à puce, la carte à puce présentant une fonction (110) de premier utilisateur, la fonction de premier utilisateur pouvant être ramenée dans un statut de première utilisation par introduction d'un des codes d'activation (B, C), et la fonction de premier utilisateur étant une fonction de la carte à puce qui garantit que la carte à puce ou la fonction définie (106) de la carte à puce n'a pas été utilisée de manière non autorisée avant la sélection de la caractéristique par l'utilisateur autorisé de la carte à puce, les compteurs d'utilisations et les compteurs d'erreurs d'introduction formant la fonction de premier utilisateur par le fait que l'introduction d'un des codes d'activation fait passer le statut de la fonction de premier utilisateur de l'objet PIN concerné au statut "utilisé" qui est affiché par l'état du compteur d'utilisations concerné, la fonction de première utilisation pouvant être réinitialisée lorsque cet objet PIN est bloqué en introduisant un autre des codes d'activation, de telle sorte que l'objet PIN bloqué est remplacé par un autre objet PIN qui présente le statut de première utilisation, chaque code d'activation ne pouvant être utilisé qu'une fois pour réinitialiser la fonction de premier utilisateur et les compteurs (118, 118', 118") d'utilisations ne pouvant pas être réinitialisés.

2. Carte à puce selon la revendication 1, dans laquelle la fonction de premier utilisateur peut prendre un statut "utilisé" et un statut de première utilisation, la fonction de première utilisation étant configurée de telle sorte que le statut de la fonction de première utilisation passe du statut de première utilisation au statut "utilisé" lorsqu'une caractéristique (104, 104', 104") a été sélectionnée par un utilisateur pour libérer la fonction (106) de la carte à puce.

3. Carte à puce selon la revendication 2, présentant des moyens (108, 108', 108") de blocage de la caractéristique lorsqu'un nombre maximum d'erreurs d'introduction est atteint, le code d'activation pouvant être introduit après le blocage de la caractéristique pour réinitialiser la fonction de première utilisation en vue de permettre une nouvelle sélection de la caractéristique.

4. Carte à puce selon la revendication 1, 2 ou 3, dans laquelle les compteurs d'erreurs d'introduction ont une première valeur initiale qui signale le blocage des caractéristiques concernées, les compteurs d'erreurs d'introduction pouvant être amenés par introduction du code d'activation concerné à une deuxième valeur qui est située à une distance de la première valeur qui correspond au nombre maximum admissible d'erreurs d'introductions.

5. Carte à puce selon l'une des revendications précédentes, qui présente des moyens (124) qui permettent d'établir un canal de messages avec un ordinateur (134) pour lire l'un des codes d'activation de la carte à puce et transférer le code d'activation à l'ordinateur.

6. Carte à puce selon la revendication 5, qui présente des moyens de cryptage (124) de bout en bout qui permettent le transfert sécurisé du code d'activation à l'ordinateur.

7. Carte à puce selon la revendication 5 ou 6, qui présente des moyens (124) d'authentification réciproque de la carte à puce et de l'ordinateur.

8. Procédé de sélection d'une caractéristique (104) de libération d'une carte à puce (100) qui présente une fonction (110) de premier utilisateur, la fonction de premier utilisateur étant une fonction de la carte à puce qui garantit que la carte à puce ou une fonction définie de la carte à puce n'a pas été utilisée de manière non autorisée avant la sélection de la caractéristique (104) par l'utilisateur autorisé de la carte à puce, la fonction de premier utilisateur de la carte à puce passant (206) à l'état de livraison par introduction (202) d'un premier code d'activation (A) et étant amenée dans le statut "utilisé" après introduction (204) d'une première caractéristique (104) par un utilisateur, pour libérer la fonction de la carte à puce, la fonction de premier utilisateur étant ramenée dans un statut de première utilisation par introduction d'un deuxième code d'activation (B, C) pour permettre à un utilisateur d'introduire la caractéristique sélectionnée,
le procédé présentant les étapes supplémentaires suivantes:
- la première caractéristique est bloquée (208) après un nombre maximum d'erreurs d'introduction de la première caractéristique,
- le deuxième code d'activation (B, C) est introduit (210),
- la fonction de premier utilisateur est ramenée (21) dans le statut de première utilisation,
- une deuxième caractéristique (104') qui libère la fonction de la carte à puce est introduite (214) et
- la fonction de premier utilisateur est ramenée (216) dans le statut "utilisé",
un code d'activation (A, B, C) introduit avant l'introduction de la caractéristique pour permettre à l'utilisateur d'introduire la caractéristique sélectionnée étant associé à chacune des caractéristiques (104, 104') et
chaque code d'activation de chacune des caractéristiques ne pouvant être utilisé qu'une fois.

9. Procédé selon la revendication 8, qui présente les étapes supplémentaires suivantes :
- établissement d'un premier canal de messages entre la carte à puce et un premier ordinateur (134) pour transférer le code d'activation de la carte à puce au premier ordinateur,
- établissement d'un deuxième canal de messages entre le premier ordinateur et un deuxième ordinateur (120) pour transférer le code d'activation du premier ordinateur au deuxième ordinateur.

10. Procédé selon la revendication 9, dans lequel le transfert du code d'activation par le premier canal de messages s'effectue au moyen d'un cryptage de bout en bout effectué par le deuxième ordinateur.

11. Système informatique comprenant :
- des moyens (136, 140) qui permettent d'établir un premier canal de messages avec une carte à puce (100) selon l'une des revendications 1 à 7 pour lire sur la carte à puce un code d'activation d'une caractéristique qui peut être sélectionnée par un utilisateur,
- des moyens (136) d'établissement d'un deuxième canal de messages avec un ordinateur (120) d'un utilisateur de la carte à puce pour transférer le code d'activation à l'ordinateur.

12. Système informatique selon la revendication 11, qui présente des moyens (140) de cryptage de bout en bout pour le transfert du code d'activation par le premier canal de messages et des moyens (136) de messagerie sécurisée qui permettent le transfert sécurisé du code d'activation par le deuxième canal de messages.
